# FASCICULE DE BREVET EUROPEEN

(11) **EP 1 115 517 B1**
(45) Date de publication et mention de la délivrance du brevet: **17.04.2002**
(21) Numéro de dépôt: 99943012.7
(22) Date de dépôt: 21.09.1999
(51) Int. Cl.: B21D 7/16, B23Q 3/155

(54) **DISPOSITIF PREHENSEUR POUR LE CHANGEMENT DES OUTILS DE CINTRAGE SUR UNE MACHINE A CINTRER LES TUBES**
GREIFER ZUM WECHSELN VON BIEGEWERKZEUGEN FÜR EINE ROHRBIEGEMASCHINE
GRASPING DEVICE FOR CHANGING BENDING TOOLS ON A TUBE BENDING MACHINE

(30) Priorité: 22.09.1998 FR 9811981
(43) Date de publication de la demande: 18.07.2001
(73) Titulaire: Silfax S.A.R.L., 69390 Vourles (FR)
(72) Inventeur: CAPPELLO, Serge, F-69440 Taluyers (FR); BRUYAS, Jean-Paul, F-69007 Lyon (FR); CHASTAN, Jean-Paul, F-69130 Ecully (FR)
(74) Mandataire: Schmitt, John
(86) Numéro de dépôt international: FR9902235
(87) Numéro de publication internationale: WO0016922

(56) Documents cités:
- EP-A- 0 120 336
- US-A- 4 599 786

## Description

La présente invention est relative à un dispositif préhenseur pour le changement des outils de cintrage sur une machine à cintrer les tubes de type standard.

On connaît d'après le brevet EP 120 336, une machine à cintrer les tubes qui est solidaire sur son gabarit de cintrage, d'un dispositif support permettant seulement le changement des mâchoires de serrages par une combinaison de déplacements verticaux et horizontaux au-dessus dudit gabarit de cintrage.

La machine décrite dans le brevet EP 120 336 présente pour le changement des outils des temps de cycles qui sont trop longs, et qui ralentissent la production de coudes ou de cintres sur les tubes. De plus, le dispositif support ne permet pas le changement simultané des mâchoires de serrage, ou de contre serrage, qui correspondent respectivement aux mors mobile et mors fixe d'une machine à cintrer les tubes standard.

Pour résoudre ce problème, le demandeur a déposé une demande de brevet FR 98 01315, qui décrit une machine à cintrer les tubes comportant un dispositif à barillet ayant pour objet d'amener au niveau de la tête de cintrage de la machine des jeux de mors de serrage comportant des empreintes de formes différentes, et de pouvoir sélectionner celui correspondant au profil extérieur du tube à cintrer par simple rotation dudit dispositif à barillet autour de son axe longitudinal.

La machine à cintrer les tubes (décrite dans la demande de brevet FR 98 01315) est solidaire sur le bras de cintrage du dispositif à barillet portant des jeux de mors de serrage d'empreintes différentes. Chaque jeu de mors de serrage est constitué d'un mors fixe et d'un mors mobile permettant la réalisation d'un coude, dont le rayon de cintrage est particulier. Le dispositif à barillet peut pivoter en même temps que le bras de cintrage autour de la tête de cintrage pour réaliser la mise en forme des tubes.

En outre, le dispositif à barillet peut se déplacer, d'une part en rotation autour de son propre axe longitudinal, et d'autre part suivant des directions comprises dans des plans perpendiculaires et/ou parallèles à celui contenant l'axe longitudinal du bâti fixe.

Le dispositif préhenseur suivant la présente invention a pour but de venir s'adapter autour d'une machine à cintrer les tubes de type standard sans en modifier la structure et le fonctionnement.

Le dispositif préhenseur n'est pas solidaire de la tête de cintrage de la machine à cintrer, il est indépendant et placé autour de cette dernière pour qu'il puisse pendant le temps de cycle de cintrage du tube venir changer les outils ou les jeux de mors de serrage.

Le dispositif préhenseur pour le changement des outils de cintrage sur une machine à cintrer les tubes de type standard, selon la présente invention est caractérisé en ce qu'il comprend :
- Un portique ou analogue disposé autour de la machine à cintrer, au-dessus de la tête de cintrage et du bras de cintrage ;
- Une tête rotative présentant par rapport au portique des mouvements indépendants qui sont constitués de deux rotations indépendantes ou dépendantes disposées dans des plans différents, d'un mouvement vertical, et d'un mouvement horizontal ;
- Et un magasin d'outils pouvant se déplacer indépendamment des mouvements de la tête rotative dans une direction horizontale ou rotative par rapport au portique.

Des modes de réalisation préférés sont définis dans les revendications dépendantes.

La description qui va suivre au regard de dessins annexés, donnés à titre d'exemples, permettra de mieux comprendre l'invention, les caractéristiques qu'elle présente et les avantages qu'elle est susceptible de procurer :
Figure 1 est une vue en perspective illustrant une machine à cintrer les tubes de type standard autour de laquelle est prévu un dispositif préhenseur pour le changement des outils de cintrage suivant la présente invention.
Figure 2 est une vue représentant en détail la tête de cintrage de la machine au-dessus de laquelle est disposé un jeu de mors de serrage porté par le dispositif préhenseur suivant la présente invention.
Figure 3 est une vue en perspective montrant le dispositif préhenseur pour le changement des outils de cintrage suivant l'invention.
Figure 4 est une vue de coté représentant le dispositif de changement d'outils suivant l'invention.
Figure 5 est une vue de face illustrant le dispositif préhenseur pour le changement des outils de cintrage suivant la présente invention.

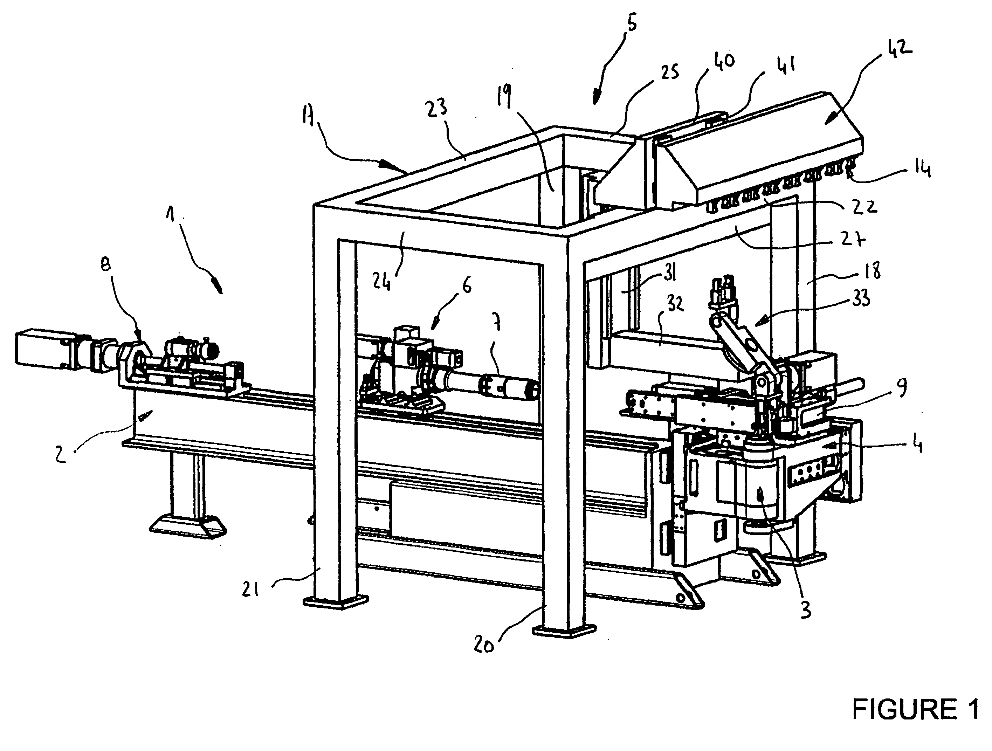

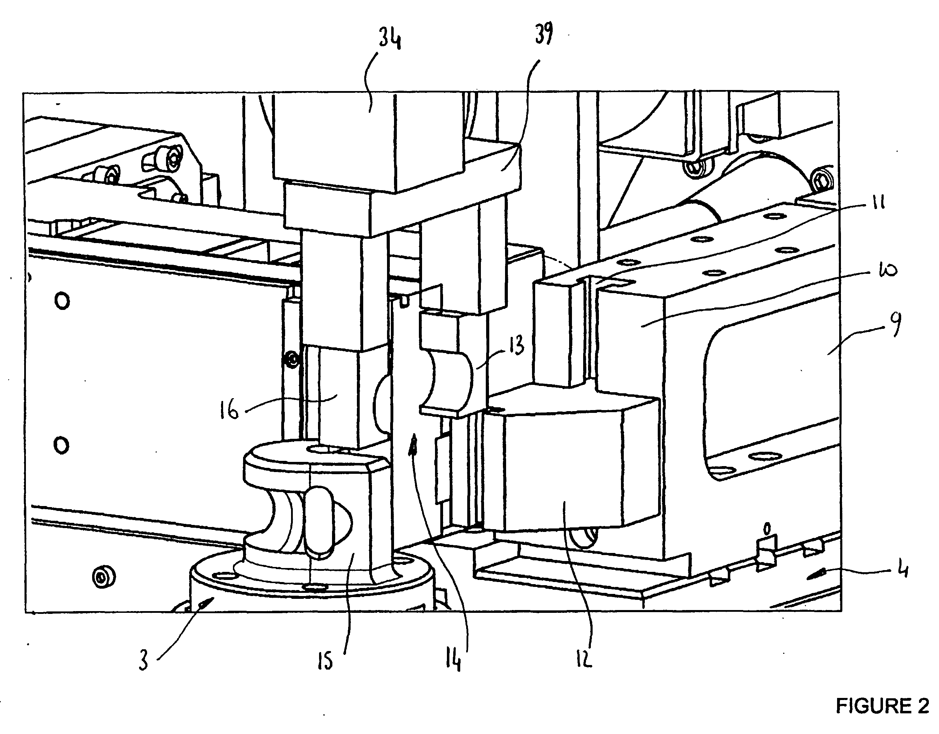

On a montré en figures 1 et 2 une machine à cintrer 1 de type standard comportant un bâti fixe 2 qui porte à l'une de ses extrémités une tête de cintrage 3 autour de laquelle pivote un bras de cintrage 4, et un dispositif préhenseur 5 pour le changement des outils de cintrage qui est disposé au-dessus de ladite machine et au niveau de la tête de cintrage 3.

Le bâti fixe 2 comprend à la manière connue, et suivant son axe longitudinal, un rail de guidage sur lequel coulisse un chariot 6 qui se rapproche et s'éloigne de la tête de cintrage 3.

Le chariot 6 comporte un mandrin 7 pour la réception et le guidage d'un tube à cintrer, non représenté, qui est déplacé en translation et en rotation autour de son axe.
Un dispositif 8 coulisse également sur le rail longitudinal du bâti fixe 2 pour éviter, au moyen d'une olive, l'écrasement du tube lors de son cintrage.

Le bras de cintrage 4 comporte un support de mors 9 qui se déplace horizontalement en direction de la tête de cintrage 3 par l'intermédiaire de dispositifs hydrauliques ou pneumatiques ou électriques connus en soi.

Le support de mors 9 présente sur son bord vertical 10, se trouvant en face de la tête de cintrage 3, une rainure 11 en forme de T, ou analogue, qui est prévue pour recevoir un élément intermédiaire 12 destiné à coopérer avec le mors mobile 13 du jeu de mors de serrage 14.

La tête de cintrage 3 est solidaire d'un galet de cintrage 15, ou galet formeur, sur lequel vient se fixer le mors fixe 16 du jeu de mors de serrage 14.

Le galet de cintrage 15 présente un profil circulaire dont une partie est découpée pour former une échancrure en L permettant la mise en place du mors fixe 16 du jeu de mors de serrage 14.

Egalement, le galet de cintrage 15 comporte à la manière connue, une gorge périphérique qui communique avec l'empreinte du mors fixe 16, et dont le rayon de cintrage peut varier en fonction de la mise en forme à réaliser sur le tube.

La tête de cintrage 3 comporte des moyens de déplacement pour pouvoir se déplacer horizontalement et verticalement par rapport au bâti fixe 2, c'est à dire dans des directions se trouvant dans des plans perpendiculaires à celui contenant l'axe longitudinal de la machine 1 ou du bâti fixe 2.

Le dispositif préhenseur 5 pour le changement des outils de cintrage ou de jeux mors de serrage 14 est placé autour et au-dessus de la machine à cintrer 1.

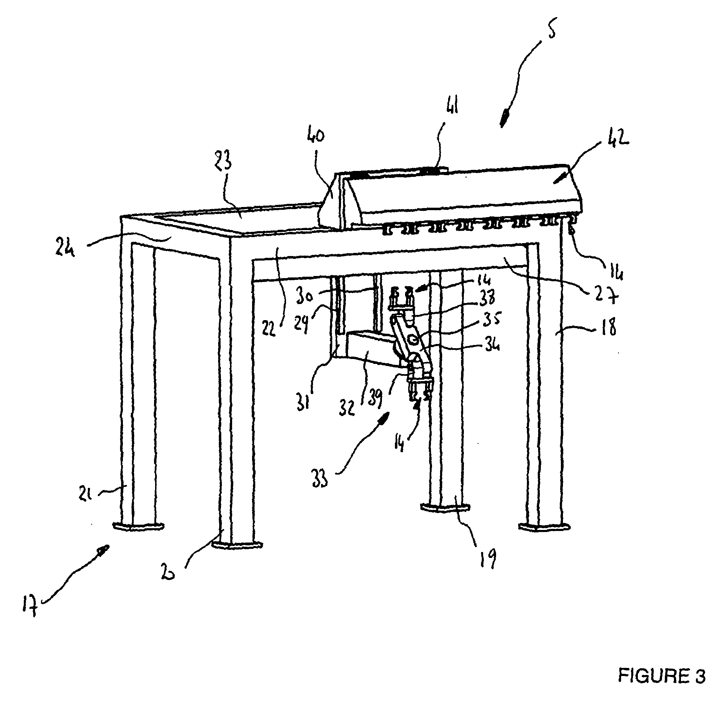

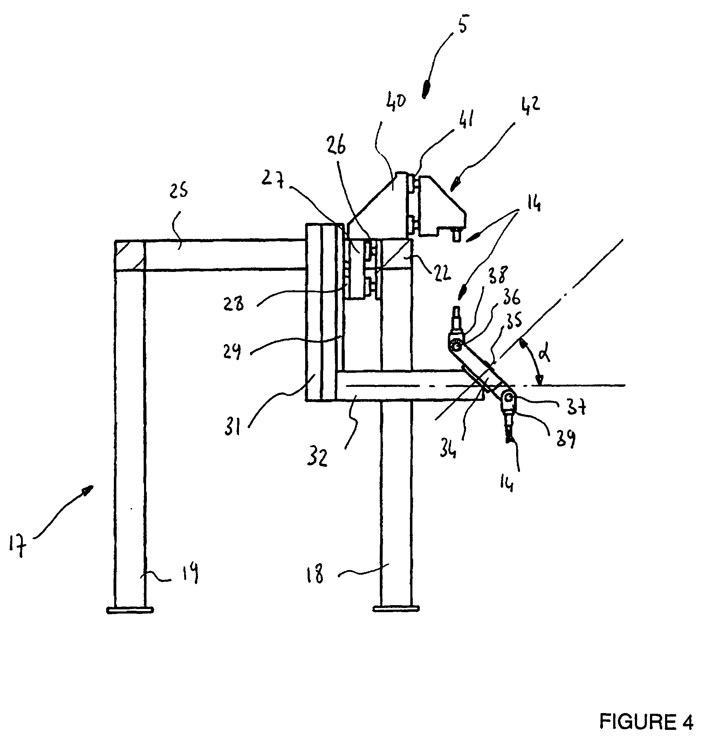

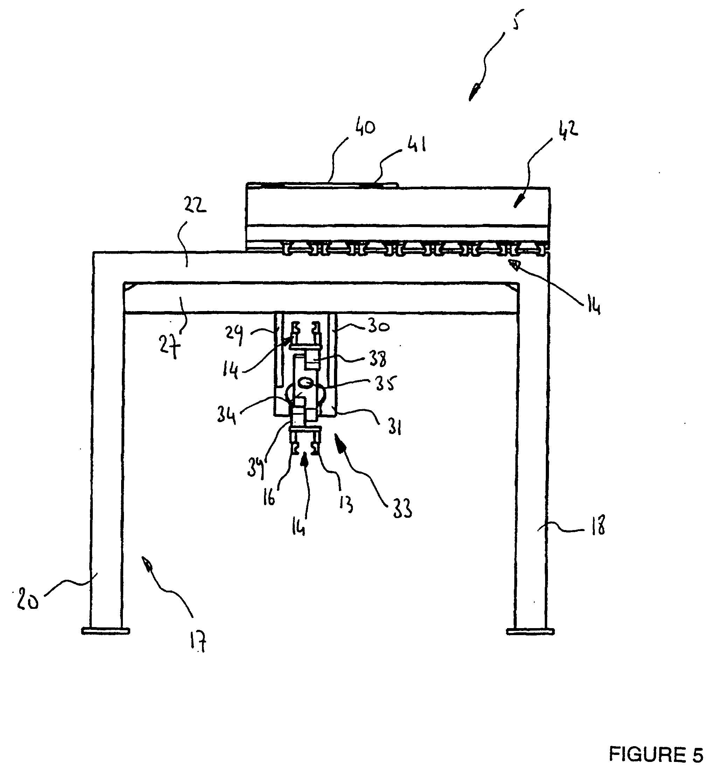

En figures 3 à 5 on a montré le dispositif préhenseur 5 qui est constitué d'un portique 17 ou analogue comportant des pieds verticaux 18 à 21 reliés entre eux dans la partie supérieure du portique 17 par des poutres horizontales 22 à 25. Il est bien évident que le portique 17 peut être remplacé par tout autre structure équivalente sans pour autant changer l'objet de l'invention.

La poutre horizontale 22 du portique 17 est solidaire, à l'intérieur de l'espace définit par les poutres horizontales 22 à 25, de moyens de guidage 26 qui coopèrent avec une traverse 27 parallèle à ladite poutre 22 et pouvant se déplacer suivant une direction horizontale par rapport audit portique.

La traverse 27 comporte sur sa face opposée à celle coopérant avec les moyens de guidage 26, un dispositif de guidage 28 qui est relié à des guides verticaux et parallèles 29 et 30, solidaires d'un support 31 de manière que ce dernier puisse se déplacer dans une direction verticale par rapport au portique 17.

Le support 31 est perpendiculairement solidaire à son axe vertical et dans sa partie inférieure d'une poutre horizontale 32, portant à son extrémité libre une tête rotative 33 constituant les moyens de préhension des outils ou des jeux de mors de serrage 14.

La tête rotative 33 est constituée d'un bras 34 pouvant tourner autour d'un axe central 35 qui est solidaire de la poutre horizontale 32 du support 31. L'axe centrale 35 est incliné d'un angle α d'environ 45° degrés par rapport au plan horizontal contenant la poutre 32.

L'inclinaison de l'axe de rotation 35 permet de disposer le bras 34 de la tête rotative 33 dans un plan incliné par rapport à celui horizontal de la poutre 32.

Cette inclinaison de la tête rotative 33 d'un angle α dégage un volume important autour de la tête de cintrage 3 de la machine 1, permettant de libérer un espace pour les manipulations du tube déjà cintrer, sans que ce dernier vienne buter contre la tête rotative.

Le bras 34 est solidaire à chacune de ses extrémités d'un axe de pivotement 36, 37 qui est disposé dans un plan horizontal et parallèle à celui contenant la poutre 32.

Chaque axe 36, 37 coopère avec un dispositif de fixation 38, 39 qui peut pivoter autour de son axe respectif 36, 37 pour venir dans un plan vertical et parallèle à celui contenant la support 31.

Chaque dispositif de fixation 38, 39 porte un jeu de mors de serrage 14 qui est constitué d'un mors mobile 13 et d'un mors fixe 16 prévus pour venir s'indexer respectivement sur l'élément intermédiaire 12 du support de mors 9 solidaire du bras de cintrage 4 et sur le galet de cintrage 15 de la tête de cintrage 3 de la machine à cintrer 1 (figure 2).

La poutre horizontale 22 du portique 17 est solidaire au-dessus des moyens de guidage 26 d'une traverse horizontale 40 pourvue de moyens de guidage 41 permettant le coulissement ou la rotation d'un magasin d'outils 42 parallèlement à la poutre 22.

Le magasin d'outils 42 comprend des jeux de mors de serrage 14 comportant chacun un mors mobile 13 et un mors fixe 16. Les jeux de mors de serrage 14 présentent des empreintes dont les rayons de cintrage sont différents pour permettre sur la même machine à cintrer 1 de réaliser sur un même tube plusieurs cintrage.

Le magasin d'outils 42 peut également porter des galets de cintrage 15 solidaires du mors fixe 16 constituant un outil monobloc et des mors mobiles 13 formant des jeux de mors de serrage 14.

Le magasin d'outils 42 est piloté par une unité centrale, non représentée, qui est indépendante ou identique à celle commandant la machine à cintrer 1.

On note que les mouvements horizontaux du magasin d'outils 42 sont indépendants de ceux combinés horizontaux et verticaux permettant les déplacements de la tête rotative 33.

L'indépendance des mouvements du magasin d'outils 42 et de la tête rotative 33 permet de réduire le temps de cycle pour le changement des jeux de mors de serrage 14, et plus particulièrement l'approvisionnement des jeux de mors de serrage 14 qui s'effectue pendant le cintrage du tube sur la machine à cintrer 1.

On constate que la tête 33 présente des mouvements combinés qui sont constitués de deux rotations indépendantes ou dépendantes disposées dans des plans différents, d'un mouvement vertical par rapport au portique 17 grâce au déplacement du support 31, et d'un mouvement horizontal par rapport au portique 17 par l'intermédiaire de la traverse 27.

On comprend aisément de la description ci-dessus le fonctionnement du dispositif préhenseur 5 pour le changement des outils de cintrage par rapport à un cycle de cintrage d'un tube sur la machine 1.

Par exemple, il est possible de commencer le cycle de cintrage lorsque le bras de cintrage 4 de la machine 1 est à O° degré par rapport au bâti fixe 2, c'est à dire, qu'il est revenu dans sa position d'origine après le cintrage du tube, comme montré en figure 1.

Ainsi, le bras de cintrage 4, et plus particulièrement le support de mors 9, porte par l'intermédiaire de l'élément 12, un mors mobile 13, tandis que le galet de cintrage 15 coopère avec un mors mobile 16 formant un premier jeu de mors de serrage 14 qui a permis de réaliser le cintrage du tube.

Le dispositif préhenseur 5 présente par un mouvement horizontal de la traverse 27, la tête rotative 33 au-dessus de la tête de cintrage 3 et du bras de cintrage 4.

Par un déplacement vertical du support 31, la tête rotative 33 est amenée à proximité de la tête de cintrage 3 et du bras de cintrage 4.

La tête rotative 33 présente son dispositif de fixation 39 qui est vide et préalablement positionné dans une direction verticale par un pivotement autour de l'axe 37 au-dessus des mors mobiles 13 et fixes 16 du premier jeu de mors de serrage 14.

La tête rotative 33 récupère, par un déplacement vertical vers le bas du support 31, sur son dispositif de fixation 39 les mors mobiles 13 et fixes 16 du premier jeu de mors de serrage 14 par encliquetage ou tout autre moyen de fixation analogue.

La tête rotative 33 remonte par un déplacement vertical du support 31 par rapport au portique 17 pour extraire les mors mobiles 13 et fixes 16 de l'élément intermédiaire 12 et du galet de cintrage 15.

La tête 33 pivote autour de son axe central 35 d'un demi-tour pour présenter au-dessus de la tête de cintrage 3 et du bras de cintrage 4, un nouveau jeu de mors de serrage 14 porté par le dispositif de fixation 38. Ce dernier est placé dans une position verticale par un pivotement autour de son axe 36 afin que les mors mobiles 13 et fixes 16 du nouveau jeu de mors de serrage 14 soient dans le même plan vertical que la tête de cintrage 3 et le bras de cintrage 4.

La tête rotative 33 descend par l'intermédiaire du support 31 pour amener le nouveau jeu de mors de serrage 14 et respectivement le mors mobiles 13 dans l'élément intermédiaire 12 du bras de cintrage 4 et le mors fixe 16 dans l'échancrure du galet de cintrage 15 de la tête de cintrage 3.

Les mors mobiles 13 et fixes 16 du nouveau jeu de mors de serrage 14 sont déverrouillés du dispositif de fixation 38 par des moyens pneumatiques ou analogues, non représentés, et séparés du dispositif de fixation 38 qui se trouve libre et sans jeu de mors de serrage lors de la remonté de la tête rotative 33.

Simultanément à la mise en place du nouveau jeu de mors de serrage 14 sur la machine à cintrer 1, le magasin 42 se déplace horizontalement sur la poutre 22 du portique 17 pour présenter dans l'axe de la tête rotative 33, et plus particulièrement en face du dispositif de fixation 39, un logement vide de réception de jeu de mors de serrage 14.

La tête rotative 33 remonte verticalement au moyen du support 31 par rapport au portique 17 permettant la mise en place du premier jeu de mors de serrage 14, solidaire du dispositif de fixation 39 dans le logement vide sélectionné dans le magasin 42.

La tête rotative 33 descend verticalement grâce au support 31 pour laisser les jeux de mors de serrage 14 dans le magasin 42 et libérer le dispositif de fixation 39. Le magasin 42 se déplace à nouveau horizontalement sur la poutre 22 pour présenter en face du dispositif de fixation 39 un autre jeu de mors de serrage 14.

La tête rotative 33 remonte pour venir fixer sur le dispositif 39 l'autre jeu de mors de serrage 14, tandis que le dispositif de fixation 38 est libre et sans outil.

Simultanément aux déplacements de la tête rotative 33 et du magasin 42 pour le déchargement et le chargement des jeu de mors de serrage 14, la machine à cintrer 1 procède à la mise en forme d'un coude sur le tube au moyen du jeu de mors de serrage disposé par l'intermédiaire du dispositif de fixation 38.

Dès que le cintrage du tube est terminé, on procède à nouveau à l'ensemble des étapes décrites ci-dessus, mais en commençant avec le dispositif de fixation 38, qui est vide pour la récupération du jeu de mors de serrage 14 chargé sur la machine 1.

## Revendications

1. Dispositif préhenseur pour le changement des outils de cintrage sur une machine à cintrer les tubes de type standard, **caractérisé en ce qu**'il comprend :
• Un portique ou analogue (17) disposé autour de la machine à cintrer (1), au-dessus de la tête de cintrage (3) et du bras de cintrage (4) ;
• Une tête rotative (33) présentant par rapport au portique (17) des mouvements indépendants qui sont constitués de deux rotations indépendantes ou dépendantes disposées dans des plans différents, d'un mouvement vertical, et d'un mouvement horizontal ;
• Et un magasin d'outil (42) pouvant se déplacer indépendamment des mouvements de la tête rotative (33) dans une direction horizontale ou rotative par rapport au portique (17).

2. Dispositif préhenseur suivant la revendication 1, **caractérisé en ce que** la tête rotative (33) pivote autour d'un axe central (35) qui est incliné d'un angle (α) par rapport à un plan horizontal.

3. Dispositif préhenseur suivant la revendication 2, **caractérisé en ce que** l'angle (α) est de 45° degrés par rapport à un plan horizontal.

4. Dispositif préhenseur suivant la revendication 1, **caractérisé en ce que** le portique (17) est constitué de quatre pieds verticaux (18 à 21) reliés entre eux dans la partie supérieure par quatre poutres horizontales (22 à 25) qui sont disposées de manière que la poutre (22) porte la tête rotative (33) et le magasin d'outils (42).

5. Dispositif préhenseur suivant la revendication 4, **caractérisé en ce que** la poutre horizontale (22) est solidaire de moyens de guidage (26) qui coopèrent avec une traverse (27) parallèle à ladite poutre (22) et pouvant se déplacer suivant une direction horizontale par rapport au portique (17), ladite traverse (27) comportant sur sa face opposée à celle coopérant avec les moyens de guidage (26), un dispositif de guidage (28) qui permet à un support (31) de se déplacer dans une direction verticale par rapport au portique (17), ledit support (31) étant solidaire perpendiculairement à son axe vertical et dans sa partie inférieure d'une poutre horizontale (32) portant à son extrémité libre la tête rotative (33) constituant les moyens de préhension des outils ou jeux de mors de serrage (14).

6. Dispositif préhenseur suivant la revendication 2, **caractérisé en ce que** la tête rotative (33) est constituée d'un bras (34) pouvant tourner autour de l'axe central (35) qui est solidaire de la poutre horizontale (32) du support (31).

7. Dispositif préhenseur suivant la revendication 6, **caractérisé en ce que** le bras (34) est solidaire à chacune de ses extrémités d'un axe de pivotement (36, 37) qui coopère chacun avec un dispositif de fixation (38, 39) pivotant autour de son axe respectif pour venir dans un plan vertical et parallèle à celui contenant la support (31).

8. Dispositif préhenseur suivant la revendication 7, **caractérisé en ce que** chaque dispositif de fixation (38, 39) est prévu pour porter un jeu de mors de serrage (14) qui est constitué d'un mors mobile (13) et d'un mors fixe (16), venant s'indexer respectivement sur l'élément intermédiaire (12) du support de mors (9) solidaire du bras de cintrage (4) et sur le galet de cintrage (15) de la tête de cintrage (3) de la machine à cintrer (1).

9. Dispositif préhenseur suivant la revendication 7, **caractérisé en ce que** le bras (34) est solidaire à chacune de ses extrémités d'un axe de pivotement (36, 37) qui est disposé dans un plan horizontal et parallèle à celui contenant la poutre (32).

10. Dispositif préhenseur suivant la revendication 4, **caractérisé en ce que** la poutre horizontale (22) est solidaire au-dessus des moyens de guidage (26) d'une traverse horizontale (40) pourvue de moyens de guidage (41) permettant le coulissement ou la rotation du magasin d'outils (42).

11. Dispositif préhenseur suivant la revendication 8, **caractérisé en ce que** chaque jeu de mors de serrage (14) et constitué d'un mors mobile (13) et d'un outil monobloc formé du galet de cintrage (15) sur lequel est fixé le mors fixe (16).

## Claims

1. Grasping device for changing the bending tools on a tube bending machine of standard type, **characterized in that** it comprises:
• a portal frame or the like (17) placed around the bending machine (1) over the bending head (3) and bending arm (4);
• a rotary head (33) which, with respect to the portal frame (17) has independent movements which consist of two independent or dependent rotations in different planes, a vertical movement, and a horizontal movement;
• and a tool magazine (42) which can move independently of the movements of the rotary head (33) in a horizontal or rotary direction with respect to the portal frame (17).

2. Grasping device according to Claim 1, **characterized in that** the rotary head (33) pivots about a central axle (35) which is inclined by an angle (α) with respect to a horizontal plane.

3. Grasping device according to Claim 2, **characterized in that** the angle (α) is 45° with respect to a horizontal plane.

4. Grasping device according to Claim 1, **characterized in that** the portal frame (17) consists of four vertical legs (18 to 21) connected together at the upper part by four horizontal beams (22 to 25) which are arranged in such a way that the beam (22) carries the rotary head (33) and the tool magazine (42).

5. Grasping device according to Claim 4, **characterized in that** the horizontal beam (22) is secured to guide means (26) which collaborate with a crossmember (27) parallel to same beam (22) and able to move in a horizontal direction with respect to the portal frame (17), said crossmember (27) comprising, on its opposite side to the one that collaborates with the guide means (36), a guide device (28) which allows a support (31) to move in a vertical direction with respect to the portal frame (17), said support (31) being secured, at right angles to its vertical axle and in its lower part, to a horizontal beam (32) which, at its free end, carries the rotary head (33) constituting the means of grasping the tools or sets of clamping jaws (14).

6. Grasping device according to Claim 2, **characterized in that** the rotary head (33) consists of an arm (34) which can rotate about the central axle (35) which is secured to the horizontal beam (32) of the support (31).

7. Grasping device according to Claim 6, **characterized in that** the arm (34) is secured at each of its ends to a pivot axle (36, 37) each of which collaborates with a fixing device (38, 39) pivoting about its respective axle to move into a vertical plane parallel to the one containing the support (31).

8. Grasping device according to Claim 7, **characterized in that** each fixing device (38, 39) is designed to carry a set of clamping jaws (14) which consists of a moving jaw (13) and a fixed jaw (16) indexed respectively on the intermediate element (12) of the jaw support (9) secured to the bending arm (4) and on the bending roller (15) of the bending head (3) of the bending machine (1).

9. Grasping device according to Claim 7, **characterized in that** the arm (34) is secured at each of its ends to a pivot axle (36, 37) which is arranged in a horizontal plane parallel to the one containing the beam (32).

10. Grasping device according to Claim 4, **characterized in that** the horizontal beam (22) is secured, above the guide means (26), to a horizontal crossmember (40) equipped with guide means (41) allowing the tool magazine (42) to slide or rotate.

11. Grasping device according to Claim 8, **characterized in that** each set of clamping jaws (14) consists of a moving jaw (13) and of a monobloc tool formed of the bending roller (15) on which the fixed jaw (16) is fixed.

## Patentansprüche

1. Greifvorrichtung zum Wechseln von Biegewerkzeugen an einer standardmäßigen Rohrbiegemaschine, **dadurch gekennzeichnet, daß** sie folgendes umfaßt:
- einen um die Biegemaschine (1) herum über dem Biegekopf (3) und dem Biegearm (4) angeordneten Tragrahmen (17) oder dergleichen;
- einen Drehkopf (33), der bezüglich des Tragrahmens (17) unabhängige Bewegungen aufweist, die aus zwei unabhängigen oder abhängigen Drehungen in verschiedenen Ebenen, einer Vertikalbewegung und einer Horizontalbewegung bestehen;
- und ein Werkzeugmagazin (42), das sich unabhängig von den Bewegungen des Drehkopfs (33) in einer Horizontal- oder Drehrichtung bezüglich des Tragrahmens (17) bewegen kann.

2. Greifvorrichtung nach Anspruch 1, **dadurch gekennzeichnet, daß** der Drehkopf (33) um eine in einem Winkel (α) zu einer horizontalen Ebene geneigte mittlere Achse (35) schwenkt.

3. Greifvorrichtung nach Anspruch 2, **dadurch gekennzeichnet, daß** der Winkel (α) 45° zur horizontalen Ebene beträgt.

4. Greifvorrichtung nach Anspruch 1, **dadurch gekennzeichnet, daß** der Tragrahmen (17) aus vier vertikalen Füßen (18 bis 21) besteht, die im oberen Teil durch vier horizontale Träger (22 bis 25) miteinander verbunden sind, welche so angeordnet sind, daß der Träger (22) den Drehkopf (33) und das Werkzeugmagazin (42) trägt.

5. Greifvorrichtung nach Anspruch 4, **dadurch gekennzeichnet, daß** der horizontale Träger (22) mit Führungsmitteln (26) fest verbunden ist, die mit einem sich parallel zum Träger (22) erstreckenden Querträger (27) zusammenwirken und sich in einer horizontalen Richtung bezüglich des Tragrahmens (17) bewegen können, wobei der Querträger (27) an seiner Fläche, die der mit den Führungsmitteln (26) zusammenwirkenden Fläche gegenüberliegt, eine Führungsvorrichtung (28) aufweist, die es einer Stütze (31) gestattet, sich in einer vertikalen Richtung bezüglich des Tragrahmens (17) zu bewegen, wobei die Stütze (31) senkrecht zu ihrer vertikalen Achse und in ihrem unteren Teil mit einem horizontalen Träger (32) fest verbunden ist, der an seinem freien Ende den Drehkopf (33) trägt, der die Mittel zum Ergreifen der Werkzeuge oder Spannbackensätze (14) bildet.

6. Greifvorrichtung nach Anspruch 2, **dadurch gekennzeichnet, daß** der Drehkopf (33) aus einem Arm (34) besteht, der sich um die mittlere Achse (35) drehen kann, die mit dem horizontalen Träger (32) der Stütze (31) fest verbunden ist.

7. Greifvorrichtung nach Anspruch 6, **dadurch gekennzeichnet, daß** der Arm (34) an jedem seiner Enden mit einer Schwenkachse (36, 37) fest verbunden ist, die jeweils mit einer Befestigungsvorrichtung (38, 39) zusammenwirken, die um ihre jeweilige Achse schwenken, um in eine Ebene zu gelangen, die vertikal und parallel zu der die Stütze (31) enthaltenden verläuft.

8. Greifvorrichtung nach Anspruch 7, **dadurch gekennzeichnet, daß** jede Befestigungsvorrichtung (38, 39) zum Tragen eines Spannbackensatzes (14) vorgesehen ist, der aus einer beweglichen Spannbacke (13) und einer feststehenden Spannbacke (16) besteht, die am Zwischenelement (12) des mit dem Biegearm (4) fest verbundenen Spannbackenträgers (9) bzw. an der Biegewalze (15) des Biegekopfs (3) der Biegemaschine (1) verrastet sind.

9. Greifvorrichtung nach Anspruch 7, **dadurch gekennzeichnet, daß** der Arm (34) an jedem seiner Enden mit einer Schwenkachse (36, 37) fest verbunden ist, die in einer Ebene angeordnet ist, welche horizontal und parallel zu der den Träger (32) enthaltenden verläuft.

10. Greifvorrichtung nach Anspruch 4, **dadurch gekennzeichnet, daß** der horizontale Träger (22) über den Führungsmitteln (26) mit einem horizontalen Querträger (40) fest verbunden ist, der mit Führungsmitteln (41) versehen ist, die die Verschiebung oder Drehung des Werkzeugmagazins (42) gestatten.

11. Greifvorrichtung nach Anspruch 8, **dadurch gekennzeichnet, daß** jeder Spannbackensatz (14) aus einer beweglichen Spannbacke (13) und einem einstückigen Werkzeug besteht, das durch die Biegewalze (15) gebildet wird, an der die feste Spannbacke (16) befestigt ist.
